# EUROPEAN PATENT APPLICATION

(11) **EP 4 769 633 A1**
(43) Date of publication of application: **01.07.2026**
(21) Application number: 24951688.1
(22) Date of filing: 12.09.2024
(51) Int. Cl.: H01M 10/42, G06F 18/2431, G01R 31/36, B60L 58/10

(54) **FAULT PROCESSING METHOD AND APPARATUS, AND COMPUTER-READABLE STORAGE MEDIUM**

(30) Priority: 19.08.2024 CN 202411139564
(71) Applicant: Suzhou Qiancheng New Energy Technology Co., Ltd., Suzhou, Jiangsu 215101 (CN)
(72) Inventor: ZHANG, He, Suzhou, Jiangsu 215101 (CN)
(74) Representative: Bayramoglu et al.
(86) International application number: PCT/CN2024/118575
(87) International publication number: WO 2026/040141

(57) **Abstract**

This application discloses a fault processing method and apparatus, and a computer-readable storage medium, and relates to the field of electric power technologies, so as to improve the flexibility of battery fault processing. The method includes: obtaining a first parameter value of a target parameter of a battery at a first moment; determining a target fault level among multiple fault levels of the battery based on the first parameter value, where the target fault level is used to indicate a risk level of the battery at the first moment; and executing a target fault processing policy corresponding to the target fault level.

## Description

### TECHNICAL FIELD

This application relates to the field of electric power technologies, and in particular, to a fault processing method and apparatus, and a computer-readable storage medium.

### BACKGROUND TECHNOLOGY

In a battery running process, to avoid occurrence of a dangerous situation such as battery explosion or combustion, an existing fault processing method is to detect that a battery is faulty (for example, a voltage is excessively large, a current is excessively large, or a temperature is excessively large), and configure the battery's output power to be zero.

This solution can ensure the safety of the battery when the battery is faulty. However, since the battery being faulty does not necessarily lead to a risk occurring on the battery, the existing solution has relatively low flexibility in battery fault processing.

### SUMMARY OF THE INVENTION

### TECHNICAL PROBLEMS

An objective of embodiments of this application is to provide a fault processing method and apparatus, and a computer-readable storage medium.

### TECHNICAL SOLUTIONS

The following technical solutions are used in this application.

According to a first aspect, a fault processing method is provided, where the method includes: obtaining a first parameter value of a target parameter of a battery at a first moment; determining a target fault level among multiple fault levels of the battery based on the first parameter value, where the target fault level is used to indicate a risk level of the battery at the first moment; and executing a target fault processing policy corresponding to the target fault level.

According to a second aspect, a fault processing apparatus is provided to implement the fault processing method in the first aspect. The fault processing apparatus includes corresponding modules, units, or means (means) for implementing the foregoing method. The modules, the units, or the means may be implemented by using hardware, software, or executing corresponding software by using hardware. The hardware or the software includes one or more modules or units corresponding to the foregoing functions. The apparatus includes an obtaining module and a processing module. The obtaining module is configured to obtain a first parameter value of a target parameter of a battery at a first moment. The processing module is configured to determine a target fault level among multiple fault levels of the battery based on the first parameter value, where the target fault level is used to indicate a risk level of the battery at the first moment. The processing module is further configured to execute a target fault processing policy corresponding to the target fault level.

According to a third aspect, a fault processing apparatus is provided, including at least one processor and a memory configured to store instructions executable by the processor, where the processor is configured to execute the instructions, to implement the method according to any one of the first aspect and the possible implementations thereof.

According to a fourth aspect, a computer-readable storage medium is provided, where when instructions in the computer-readable storage medium are executed by a processor in a fault processing apparatus, the fault processing apparatus is enabled to perform the method according to any one of the first aspect and the possible implementations thereof.

According to a fifth aspect, a computer program product including instructions is provided, where when the computer program product runs on a computer, the computer is enabled to perform the method according to any one of the first aspect and the possible implementations thereof.

According to a sixth aspect, a chip system is provided, including a processor and an interface circuit, where the interface circuit is configured to receive a computer program or instructions and transmit the computer program or the instructions to the processor; and the processor is configured to execute the computer program or the instructions, to enable the chip system to perform the method according to any one of the first aspect and the possible implementations thereof.

### BENEFICIAL EFFECTS

A beneficial effect of a method provided in an embodiment of this application is as follows: Compared with the existing solution that detects a battery fault and directly configures the battery's output power to be zero, the solution of this application obtains the first parameter value of the target parameter of the battery at the first moment, and then determines the target fault level among the multiple fault levels of the battery based on the first parameter value. Since the target fault level is used to indicate the risk level of the battery at the first moment, the target fault processing policy corresponding to the target fault level is subsequently executed, so that the risk level of the battery can be determined. Different fault processing policies are executed based on the risk level of the battery, rather than simply configuring the battery's output power to be zero, thereby improving the flexibility of fault processing.

### DESCRIPTION OF THE DRAWINGS

FIG. 1 is a schematic diagram of an architecture of a fault processing system according to this application;
FIG. 2 is a schematic flowchart of a fault processing method according to this application;
FIG. 3 is a schematic flowchart of another fault processing method according to this application;
FIG. 4 is a schematic flowchart of another fault processing method according to this application;
FIG. 5 is a schematic flowchart of another fault processing method according to this application;
FIG. 6 is a schematic flowchart of another fault processing method according to this application;
FIG. 7 is a schematic flowchart of another fault processing method according to this application;
FIG. 8 is a schematic diagram of a structure of a fault processing apparatus according to this application; and
FIG. 9 is a schematic diagram of a structure of another fault processing apparatus according to this application.

### IMPLEMENTATIONS OF THE PRESENT INVENTION

In description of this application, the term "a plurality of" means two or more unless otherwise specified. "At least one of the following items" or a similar expression means any combination of these items, including a single item or any combination of a plurality of items. For example, at least one of a, b, or c may represent a, b, c, a and b, a and c, b and c, or a, b, and c, where a, b, and c may be singular or plural.

In addition, to facilitate clear description of the technical solutions in the embodiments of this application, in the embodiments of this application, words such as "first" and "second" are used to distinguish between same items or similar items whose functions and effects are basically the same. A person skilled in the art may appreciate that the words such as "first" and "second" do not limit a quantity or an execution order, and the words such as "first" and "second" do not necessarily indicate a difference.

In addition, in the embodiments of this application, words such as "example" or "for example" are used to represent giving an example, an illustration, or a description. Any embodiment or design solution described by using "example" or "for example" in the embodiments of this application should not be interpreted as being more preferred or having more advantages than another embodiment or design solution. Exactly, use of the words such as "example" or "for example" is intended to present related concepts in a specific manner for ease of understanding.

It may be understood that "an embodiment" mentioned in the entire specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that in the embodiments of this application, sequence numbers of the processes do not mean an execution sequence. The execution sequence of the processes should be determined based on functions and internal logic of the processes, and should not be construed as any limitation on the implementation processes of the embodiments of this application.

It may be understood that, in this application, "when..." and "if" refer to the corresponding processing in an objective situation, which is not a time limit, and does not require that a determining action is required during implementation, and does not mean that other restrictions exist.

It may be understood that some optional features in the embodiments of this application may not depend on another feature in some scenarios, for example, a solution on which the feature is currently based, may be independently implemented to resolve a corresponding technical problem and achieve a corresponding effect, or may be combined with another feature in some scenarios according to a requirement. Correspondingly, the apparatus provided in the embodiments of this application may also correspondingly implement these features or functions. Details are not described herein.

In this application, unless otherwise specified, a same or similar part of the embodiments may be mutually referenced. In the embodiments of this application and the implementation methods in the embodiments, if no special description or logical conflict exists, terms and/or descriptions between different embodiments and between implementation methods in the embodiments are consistent and may be mutually referenced. Technical features in different embodiments and the implementation methods in the embodiments may be combined to form a new embodiment, implementation, or implementation method according to an internal logical relationship thereof. The following implementations of this application do not constitute a limitation on the protection scope of this application.

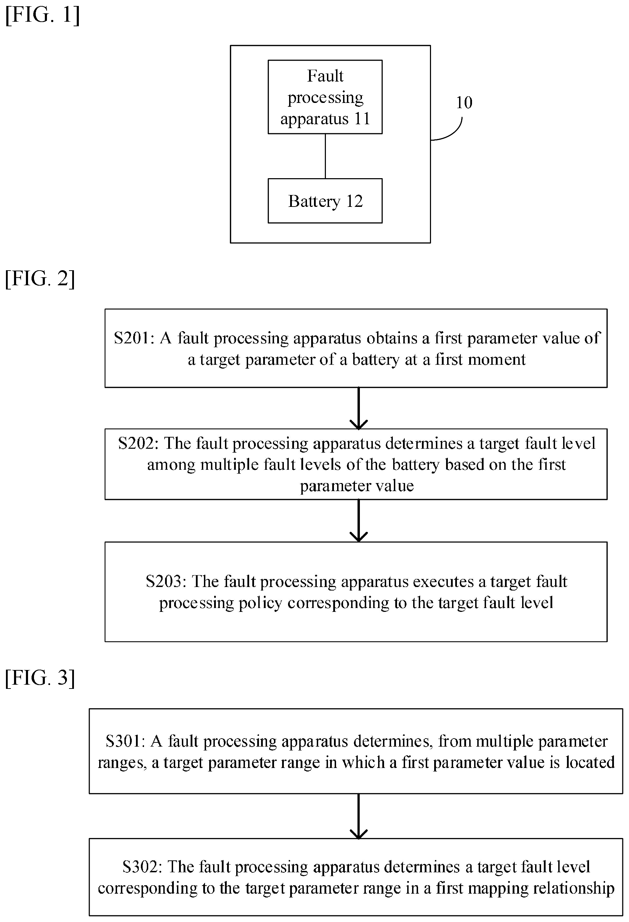

FIG. 1 is a schematic diagram of an architecture of a fault processing system according to this application. A technical solution of an embodiment of this application may be applied to the fault processing system shown in FIG. 1. As shown in FIG. 1, the fault processing system 10 includes a fault processing apparatus 11 and a battery 12.

Data exchange may be performed between the fault processing apparatus 11 and the battery 12.

For example, the battery 12 sends a status parameter to the fault processing apparatus 11, or the fault processing apparatus 11 sends an instruction to the battery 12.

It should be noted that the fault processing apparatus 11 and the battery 12 may be mutually independent devices, or may be integrated into a same device. This is not specifically limited in this application.

In the following embodiments provided in this application, an example in which the fault processing apparatus 11 and the battery 12 are disposed independently from each other is used for description in this application.

In actual application, a fault processing method provided in an embodiment of this application may be applied to the fault processing apparatus 11, or may be applied to an apparatus included in the fault processing apparatus 11.

The following describes, with reference to accompanying drawings, the fault processing method provided in an embodiment of this application by using an example in which the fault processing method is applied to the fault processing apparatus 11.

FIG. 2 is a schematic flowchart of a fault processing method according to this application. As shown in FIG. 2, the method includes the following steps.

S201: A fault processing apparatus obtains a first parameter value of a target parameter of a battery at a first moment.

It should be noted that the battery may include multiple battery cells, for example, the battery may include multiple cells.

The target parameter may include a charging voltage of the battery, a charging current of the battery, a temperature of the battery, a discharging voltage of the battery, a discharging current of the battery, a charging voltage of the battery cell, a charging current of the battery cell, a temperature of the battery cell, a discharging current of the battery cell, a discharging voltage of the battery cell, a voltage difference of the battery cell, a temperature difference of the battery cell, or a network delay of a data transmission network of the battery. Certainly, the target parameter may alternatively include another parameter of the battery. This is not specifically limited in this application.

In a possible implementation, with reference to FIG. 1, the fault processing apparatus sends, to the battery, a first instruction used to request the first parameter value of the target parameter of the battery at the first moment. Correspondingly, the battery receives the first instruction of the fault processing apparatus.

The battery sends, to the fault processing apparatus, a first response message that includes the first parameter value of the target parameter of the battery at the first moment. Correspondingly, the fault processing apparatus receives the first response message of the battery, and obtains the first parameter value of the target parameter of the battery at the first moment from the first response message.

S202: The fault processing apparatus determines a target fault level among multiple fault levels of the battery based on the first parameter value.

The target fault level is used to indicate a risk level of the battery at the first moment.

It should be noted that a quantity of the multiple fault levels may be 3, 4, or 5. This is not specifically limited in this application.

For example, when the quantity of the multiple fault levels is 3, the risk level may include a low risk level, a medium risk level, or a high risk level.

When the quantity of the multiple fault levels is 4, the risk level may include a low risk level, a relatively low risk level, a relatively high risk level, or a high risk level.

When the quantity of the multiple fault levels is 5, the risk level may include a low risk level, a relatively low risk level, a medium risk level, a relatively high risk level, or a high risk level.

In a possible implementation, the fault processing apparatus determines, from multiple parameter ranges, a target parameter range in which the first parameter value is located; and then determines a target fault level corresponding to the target parameter range in a first mapping relationship.

The first mapping relationship includes a one-to-one correspondence between the multiple parameter ranges and the multiple fault levels.

It should be noted that, for specific descriptions of this possible implementation, refer to related descriptions in a subsequent part of specific implementations of this application. Details are not described herein in this application.

S203: The fault processing apparatus executes a target fault processing policy corresponding to the target fault level.

In a possible implementation, the multiple fault levels include a first fault level, a second fault level, and a third fault level, the first fault level indicates a low risk level of the battery at the first moment, a risk level of the battery at the first moment indicated by the second fault level is higher than the risk level of the battery at the first moment indicated by the first fault level, and a risk level of the battery at the first moment indicated by the third fault level is higher than the risk level of the battery at the first moment indicated by the second fault level.

When the target fault level is the first fault level, the fault processing apparatus outputs fault prompt information, and then generates and stores a fault log of the battery.

The fault prompt information is used to indicate that the battery is faulty, and the fault log includes a fault type, a fault code, parameter values of multiple parameters of the battery at the first moment, and/or the first moment.

When the target fault level is the second fault level, the fault processing apparatus sends a first indication message to the battery, and then generates and stores a fault log of the battery.

The first indication message is used to indicate to configure the battery's output power to be a first output power, the first output power is a product of a first percentage and a second output power, the second output power is the battery's output power at the first moment, and the first output power is less than the second output power.

When the target fault level is the third fault level, the fault processing apparatus sends a fourth indication message to the battery, and then generates and stores a fault log of the battery.

The fourth indication message is used to configure the battery's output power to be a fifth output power, and configure the battery's output power from the fifth output power to zero at a third moment, duration between the third moment and the first moment is preset duration, the fifth output power is a product of a third percentage and the second output power, and the fifth output power is less than the second output power.

It should be noted that, for specific descriptions of this possible implementation, refer to related descriptions in a subsequent part of specific implementations of this application. Details are not described herein in this application.

Based on this solution, compared with the existing solution that detects a battery fault and directly configures the battery's output power to be zero, the solution of this application obtains the first parameter value of the target parameter of the battery at the first moment, and then determines the target fault level among the multiple fault levels of the battery based on the first parameter value. Since the target fault level is used to indicate the risk level of the battery at the first moment, the target fault processing policy corresponding to the target fault level is subsequently executed, so that the risk level of the battery can be determined. Different fault processing policies are executed based on the risk level of the battery, rather than simply configuring the battery's output power to be zero, thereby improving the flexibility of fault processing.

The foregoing generally describes the fault processing method provided in this application. The following further describes the fault processing method provided in this application with reference to the accompanying drawings.

In a design, FIG. 3 is a schematic flowchart of another fault processing method according to this application. As shown in FIG. 3, S202 provided in a specific implementation of this application may specifically include the following plurality of steps.

S301: A fault processing apparatus determines, from multiple parameter ranges, a target parameter range in which a first parameter value is located.

It should be noted that a quantity of the multiple parameter ranges is the same as a quantity of multiple fault levels.

For example, the quantity of the multiple fault levels is 3, and in this case, the quantity of the multiple parameter ranges is also 3. In an example in which a target parameter is a temperature of a battery, the multiple parameter ranges may include [30°-40°), [40°-50°), and [50°-∞).

In a possible implementation, the foregoing example is used as an example. If the first parameter value is 35°, the fault processing apparatus determines that 35° is located in [30°-40°), and determines [30°-40°) as the target parameter range.

It should be noted that, if the fault processing apparatus determines that the first parameter value is not in any parameter range among the multiple parameter ranges, it indicates that the target parameter is normal, and the battery does not encounter a risk due to abnormality of the target parameter, and a procedure ends.

S302: The fault processing apparatus determines a target fault level corresponding to the target parameter range in a first mapping relationship.

The first mapping relationship includes a one-to-one correspondence between the multiple parameter ranges and the multiple fault levels.

In a possible implementation, the fault processing apparatus searches for a fault level corresponding to the target parameter range in the first mapping relationship, and determines the fault level as the target fault level.

Based on this solution, since the first parameter value varies, the risk level of the battery also varies. Therefore, the target fault level of the battery can be obtained by determining, from the multiple parameter ranges, the target parameter range in which the first parameter value is located, and then determining the target fault level corresponding to the target parameter range in the first mapping relationship that includes the one-to-one correspondence between the multiple parameter ranges and the multiple fault levels.

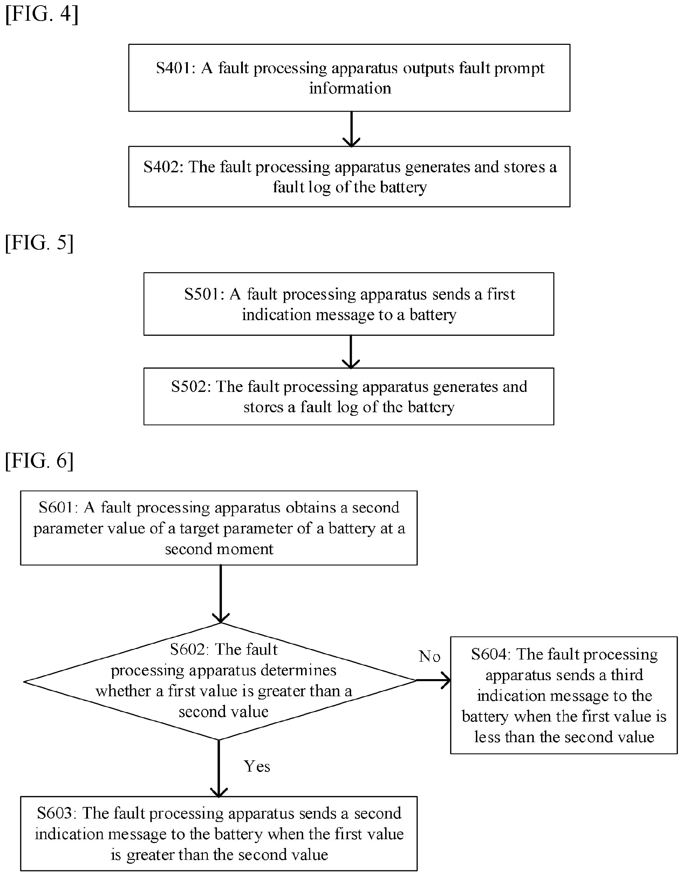

In a design, FIG. 4 is a schematic flowchart of another fault processing method according to this application. As shown in FIG. 4, when the target fault level is the first fault level, S203 provided in a specific implementation of this application may specifically include the following plurality of steps.

S401: A fault processing apparatus outputs fault prompt information.

The fault prompt information is used to indicate that a battery is faulty.

In a possible implementation, the fault processing apparatus outputs a fault status bit and a target fault level of the battery by using a display screen.

In this possible implementation, the fault prompt information is the fault status bit and the target fault level.

In another possible implementation, the fault processing apparatus plays a preset alarm sound by using a speaker.

In this possible implementation, the fault prompt information is the preset alarm sound.

In another possible implementation, the fault processing apparatus lights up a fault indicator.

In this possible implementation, the fault prompt information is that the fault indicator lights up.

S402: The fault processing apparatus generates and stores a fault log of the battery.

The fault log includes a fault type, a fault code, parameter values of multiple parameters of the battery at the first moment, and/or the first moment.

It should be noted that the fault type may include a fault of an excessively high charging voltage of a battery cell, a fault of an excessively high charging voltage of a battery, a fault of an excessively low charging voltage of a battery, a fault of an excessively low charging voltage of a battery cell, a voltage difference fault of a battery cell, a high temperature fault of a battery, a high temperature fault of a battery cell, a temperature difference fault of a battery cell, a fault of an excessively high charging current of a battery, a low temperature fault of a battery cell, a fault of an excessively high discharging voltage of a battery cell, a fault of an excessively high discharging voltage of a battery, a fault of an excessively low discharging voltage of a battery, a fault of an excessively low discharging voltage of a battery cell, a fault of an excessively high discharging current of a battery cell, an insulation fault, a pre-charging fault, a fault of an excessively long network delay, and a relay fault.

In a possible implementation, the fault processing apparatus determines a fault type corresponding to the first parameter value of the target parameter and a fault code corresponding to the target fault type; encapsulates the fault type, the fault code, the multiple parameters of the battery at the first moment, and/or the first moment to obtain a fault log; and stores the fault log in a memory.

Based on this solution, when the risk level of the battery at the first moment is low, fault prompt information is output, and then a fault log of the battery is generated and stored. On the one hand, a user can learn that the battery is faulty, and record a fault log to facilitate subsequent processing. On the other hand, since the risk level of the battery is low, the battery can continue to work, thereby avoiding affecting the user experience.

In a design, FIG. 5 is a schematic flowchart of another fault processing method according to this application. As shown in FIG. 5, when the target fault level is the second fault level, S203 provided in a specific implementation of this application may specifically include the following plurality of steps.

S501: A fault processing apparatus sends a first indication message to a battery.

The first indication message is used to indicate to configure the battery's output power to be a first output power, the first output power is a product of a first percentage and a second output power, the second output power is the battery's output power at the first moment, and the first output power is less than the second output power.

It should be noted that the percentage may be converted into another form of value, for example, a ratio. For example, if the percentage is 50%, the percentage may be converted into 1/2.

The first percentage may be 70%, 80%, or 90%. This is not specifically limited in this application.

In a possible implementation, in an example in which the second output power is 7 kilowatts (kW) and the first percentage is 70%, the fault processing apparatus determines that the first output power = 7 kW × 70% = 4.9 kW. Then, the fault processing apparatus generates a first indication message, and sends the first indication message to the battery.

Correspondingly, the battery receives the first indication message, and the battery configures the output power to be 4.9 kW.

S502: The fault processing apparatus generates and stores a fault log of the battery.

It should be noted that for description of S502, refer to the description of S402. Details are not described herein again in this application.

Based on this solution, when the risk level of the battery at the first moment is medium, the battery's output power is reduced to the first output power, and then a fault log of the battery is generated and stored. On the one hand, a fault log can be recorded to facilitate subsequent processing. On the other hand, since the risk level of the battery is medium, the battery's output power is determined and reduced to the first output power, so that the battery can have a specific output power on the basis of ensuring the safety of the battery, thereby minimizing impact on the user experience.

In a design, FIG. 6 is a schematic flowchart of another fault processing method according to this application. As shown in FIG. 6, after S502, the fault processing method provided in this application may further include the following plurality of steps.

S601: A fault processing apparatus obtains a second parameter value of a target parameter of a battery at a second moment.

A fault level corresponding to the second parameter value is a second fault level.

In a possible implementation, with reference to FIG. 1, the fault processing apparatus sends, to the battery, a second instruction used to request the second parameter value of the target parameter of the battery at the second moment. Correspondingly, the battery receives the second instruction of the fault processing apparatus.

The battery sends, to the fault processing apparatus, a second response message that includes the second parameter value of the target parameter of the battery at the second moment. Correspondingly, the fault processing apparatus receives the second response message of the battery, and obtains the second parameter value of the target parameter of the battery at the second moment from the second response message.

S602: The fault processing apparatus determines whether a first value is greater than a second value.

The first value is an absolute value of a difference between the second parameter value and a third value, the second value is an absolute value of a difference between the first parameter value and the third value, and the third value is a start value of a parameter range corresponding to the second fault level.

In a possible implementation, in an example in which the target parameter is the temperature of the battery and the parameter range corresponding to the second fault level is [40°-50°), if the first parameter value is 42° and the second parameter value is 46°, the fault processing apparatus determines 40° as the third value, determines that the first value = |46°-40°| = 6°, determines that the second value = |42°-40°| = 2°, and determines that the first value is greater than the second value, and performs S603.

If the first parameter value is 46° and the second parameter value is 42°, the fault processing apparatus determines that the first value = |42°-40°| = 2°, determines that the second value = |46°-40°| = 6°, and determines that the first value is less than the second value, and performs S604.

If the fault processing apparatus determines that the first value is equal to the second value, a procedure ends.

S603: The fault processing apparatus sends a second indication message to the battery when the first value is greater than the second value.

The second indication message is used to indicate to configure the battery's output power to be a third output power, the third output power is a product of a second percentage and a second output power, and the third output power is less than the first output power.

It should be noted that, in an example in which the first percentage is 70%, the second percentage may be 60%, 50%, or 40%. This is not specifically limited in this application.

In a possible implementation, in an example in which the second output power is 7 kW and the second percentage is 60%, the fault processing apparatus determines that the third output power = 7 kW × 60% = 4.2 kW. Then, the fault processing apparatus generates a second indication message, and sends the second indication message to the battery.

Correspondingly, the battery receives the second indication message, and the battery configures the output power to be 4.2 kW.

Based on S601-S603, when the first value is greater than the second value, it indicates that the parameter value of the target parameter of the battery continues to deteriorate, and a possibility that the battery encounters a risk increases. The battery's output power is configured to be a third output power that is lower than the first output power, thereby further ensuring the safety of the battery.

S604: The fault processing apparatus sends a third indication message to the battery when the first value is less than the second value.

The third indication message is used to indicate to configure the battery's output power to be a fourth output power, the fourth output power is a product of a third percentage and the second output power, the fourth output power is less than the second output power, and the fourth output power is greater than the first output power.

It should be noted that, in an example in which the first percentage is 70%, the second percentage may be 80%, 85%, or 90%. This is not specifically limited in this application.

In a possible implementation, in an example in which the second output power is 7 kW and the second percentage is 80%, the fault processing apparatus determines that the fourth output power = 7 kW × 80% = 5.6 kW. Then, the fault processing apparatus generates a third indication message, and sends the third indication message to the battery.

Correspondingly, the battery receives the third indication message, and the battery configures the output power to be 5.6 kW.

Based on S604, when the first value is less than the second value, it indicates that the parameter value of the target parameter of the battery is being restored to normal, and a possibility that the battery encounters a risk decreases. The battery's output power is configured to be a fourth output power that is higher than the first output power, thereby improving the user experience.

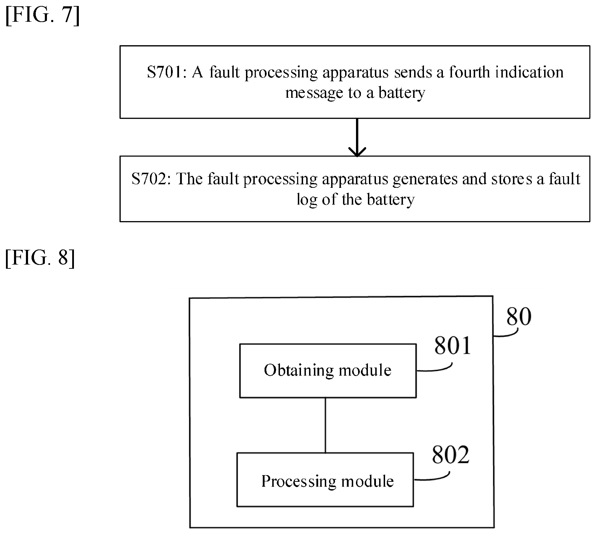

In a design, FIG. 7 is a schematic flowchart of another fault processing method according to this application. As shown in FIG. 7, when the target fault level is the third fault level, S203 provided in a specific implementation of this application may specifically include the following plurality of steps.

S701: A fault processing apparatus sends a fourth indication message to a battery.

The fourth indication message is used to configure the battery's output power to be a fifth output power, and configure the battery's output power from the fifth output power to zero at a third moment, duration between the third moment and the first moment is preset duration, the fifth output power is a product of a third percentage and the second output power, and the fifth output power is less than the second output power.

It should be noted that the third percentage may be 30%, 40%, or 50%. This is not specifically limited in this application.

The preset duration may be 2 seconds (s), 3s, or 4s. This is not specifically limited in this application.

In a possible implementation, in an example in which the second output power is 7 kW, the third percentage is 40%, and the preset duration is 2s, the fault processing apparatus determines that the fifth output power = 7 kW × 40% = 2.8 kW. Then, the fault processing apparatus generates a fourth indication message, and sends the fourth indication message to the battery.

Correspondingly, the battery receives the fourth indication message, the battery configures the output power to be 2.8 kW, and after 2s, the battery reduces the output power from 2.8 kW to zero.

S702: The fault processing apparatus generates and stores a fault log of the battery.

It should be noted that for description of S702, refer to the description of S402. Details are not described herein again in this application.

Based on this solution, when the risk level of the battery at the first moment is high, the battery's output power is configured to be the fifth output power, and after the preset duration, the battery's output power is configured from the fifth output power to zero, and then a fault log of the battery is generated and stored. On the one hand, a fault log can be recorded to facilitate subsequent processing. On the other hand, since the risk level of the battery is high, the battery's output power is reduced step by step, thereby minimizing impact on the user experience.

The solutions provided in the embodiments of this application are mainly described above from a perspective of performing a fault processing method by a fault processing apparatus. To implement the foregoing functions, the fault processing apparatus includes corresponding hardware structures and/or software modules for performing the functions. A person skilled in the art should be easily aware that, in combination with example units and algorithm steps described in the embodiments disclosed in this specification, the embodiments of this application can be implemented by hardware or a combination of hardware and computer software. Whether a specific function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

When division into the functional modules is used, refer to FIG. 8, which is a schematic diagram of a structure of a fault processing apparatus. As shown in FIG. 8, the fault processing apparatus 80 includes an obtaining module 801 and a processing module 802.

In some embodiments, the fault processing apparatus 80 may further include a storage module (not shown in FIG. 8) configured to store program instructions and data.

The obtaining module 801 is configured to obtain a first parameter value of a target parameter of a battery at a first moment. The processing module 802 is configured to determine a target fault level among multiple fault levels of the battery based on the first parameter value, where the target fault level is used to indicate a risk level of the battery at the first moment. The processing module 802 is further configured to execute a target fault processing policy corresponding to the target fault level.

All related content of the steps in the foregoing method embodiment may be cited to function descriptions of corresponding functional modules. Details are not described herein again.

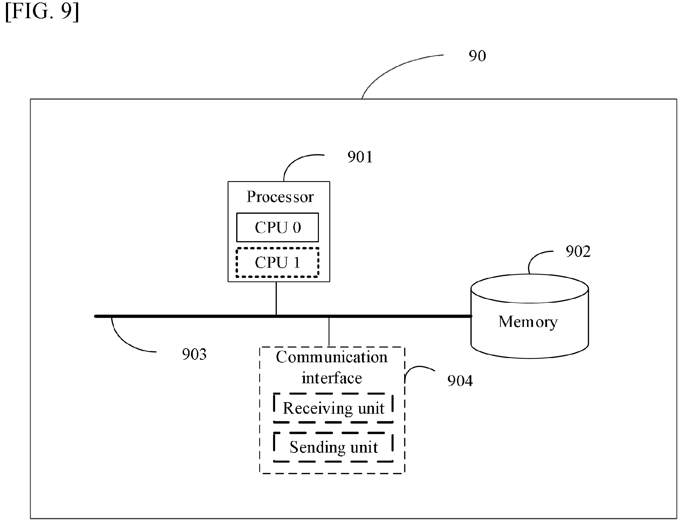

When the functions of the functional modules are implemented in a form of hardware, refer to FIG. 9, which is a schematic diagram of a structure of another fault processing apparatus. As shown in FIG. 9, the fault processing apparatus 90 includes a processor 901, a memory 902, and a bus 903. The processor 901 may be connected to the memory 902 by using the bus 903.

In an embodiment, the processor 901 may include one or more CPUs, such as a CPU 0 and a CPU 1 shown in FIG. 9.

In another possible implementation, the memory 902 may alternatively be integrated with the processor 901.

It should be noted that the structure shown in FIG. 9 does not constitute a limitation on the fault processing apparatus 90. In addition to the components shown in FIG. 9, the fault processing apparatus 90 may include more or fewer components than those shown in the figure, combine some components, or have different component arrangements.

In an example, with reference to FIG. 8, functions implemented by the obtaining module 801 and the processing module 802 in the fault processing apparatus 80 are the same as the functions of the processor 901 in FIG. 9.

In a possible implementation, in the fault processing apparatus 90 provided in this embodiment of this application, the communication interface 904 may be further integrated into the processor 901. This is not specifically limited in this embodiment of this application.

As a possible product form, the fault processing apparatus in this embodiment of this application may alternatively be implemented by using one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described in the full text of this application.

According to the foregoing descriptions of the implementations, a person skilled in the art may clearly understand that, for convenience and brevity of description, division of the foregoing functional units is merely used as an example for description. In actual application, the foregoing functions may be allocated to different functional units according to a requirement, that is, an internal structure of the apparatus is divided into different functional units, to complete all or some of the functions described above. For specific working processes of the foregoing system, apparatus, and unit, refer to corresponding processes in the foregoing method embodiments. Details are not described herein again.

An embodiment of this application further provides a computer-readable storage medium having a computer program or instructions stored thereon. When the computer program or the instructions are executed, a computer is enabled to perform the steps in the method procedure shown in the foregoing method embodiments.

An embodiment of this application provides a computer program product including instructions. When the instructions are run on a computer, the computer is enabled to perform the steps in the method procedure shown in the foregoing method embodiment.

An embodiment of this application provides a chip system, including a processor and an interface circuit. The interface circuit is configured to receive a computer program or instructions and transmit the computer program or the instructions to the processor. The processor is configured to execute the computer program or the instructions, to enable the chip system to perform the steps in the method procedure shown in the foregoing method embodiment.

The computer-readable storage medium may be, for example but not limited to, an electronic, magnetic, optical, electromagnetic, infrared, or semiconductor system, apparatus, or component, or any combination thereof.

The fault processing apparatus, the computer-readable storage medium, and the computer program product provided in the embodiments may be applied to the foregoing fault processing method provided in the embodiments. Therefore, for a technical effect that can be achieved by the fault processing apparatus, the computer-readable storage medium, and the computer program product, refer to the foregoing method embodiments. Details are not described herein again in this embodiment of this application.

Although this application is described with reference to the embodiments herein, in a process of implementing the claimed protection in this application, another variation of the disclosed embodiments may be understood and implemented by a person skilled in the art by viewing the accompanying drawings, the disclosed content, and the appended claims. In the claims, the word "comprising" (comprising) does not rule out other components or steps, and "a/an" or "one" does not rule out "a plurality of". A single processor or another unit may implement several functions listed in the claims. Some measures are documented in different dependent claims, but this does not mean that these measures cannot be combined to produce a good effect.

Although this application is described with reference to specific features and embodiments, it is clear that various modifications and combinations may be made to this application without departing from the spirit and scope of this application. Correspondingly, this specification and the accompanying drawings are merely example descriptions of this application defined by the appended claims and are considered to cover any and all of modifications, variations, combinations, or equivalents within the scope of this application. Clearly, a person skilled in the art can make various modifications and variations to this application without departing from the spirit and scope of this application. In this way, this application is also intended to include these modifications and variations, provided that these modifications and variations of this application fall within the scope of the claims of this application and equivalent technologies thereof.

## Claims

1. A fault processing method, wherein the method comprises:
obtaining a first parameter value of a target parameter of a battery at a first moment;
determining a target fault level among multiple fault levels of the battery based on the first parameter value, wherein the target fault level is used to indicate a risk level of the battery at the first moment; and
executing a target fault processing policy corresponding to the target fault level.

2. The method according to claim 1, wherein the determining a target fault level among multiple fault levels of the battery based on the first parameter value comprises:
determining, from multiple parameter ranges, a target parameter range in which the first parameter value is located; and
determining a target fault level corresponding to the target parameter range in a first mapping relationship, wherein the first mapping relationship comprises a one-to-one correspondence between the multiple parameter ranges and the multiple fault levels.

3. The method according to claim 1 or 2, wherein the multiple fault levels comprise a first fault level, a second fault level, and a third fault level, the first fault level indicates a low risk level of the battery at the first moment, a risk level of the battery at the first moment indicated by the second fault level is higher than the risk level of the battery at the first moment indicated by the first fault level, and a risk level of the battery at the first moment indicated by the third fault level is higher than the risk level of the battery at the first moment indicated by the second fault level; and
when the target fault level is the first fault level, the executing a target fault processing policy corresponding to the target fault level comprises:
outputting fault prompt information, wherein the fault prompt information is used to indicate that the battery is faulty; and
generating and storing a fault log of the battery, wherein the fault log comprises a fault type, a fault code, parameter values of multiple parameters of the battery at the first moment, and/or the first moment.

4. The method according to claim 3, wherein when the target fault level is the second fault level, the executing a target fault processing policy corresponding to the target fault level comprises:
sending a first indication message to the battery, wherein the first indication message is used to indicate to configure the battery's output power to be a first output power, the first output power is a product of a first percentage and a second output power, the second output power is the battery's output power at the first moment, and the first output power is less than the second output power; and
generating and storing a fault log of the battery.

5. The method according to claim 4, wherein the method further comprises:
obtaining a second parameter value of the target parameter of the battery at a second moment, wherein a fault level corresponding to the second parameter value is the second fault level; and
sending a second indication message to the battery when a first value is greater than a second value, wherein the first value is an absolute value of a difference between the second parameter value and a third value, the second value is an absolute value of a difference between the first parameter value and the third value, the third value is a start value of a parameter range corresponding to the second fault level, the second indication message is used to indicate to configure the battery's output power to be a third output power, the third output power is a product of a second percentage and the second output power, and the third output power is less than the first output power.

6. The method according to claim 5, wherein the method further comprises:
sending a third indication message to the battery when the first value is less than the second value, wherein the third indication message is used to indicate to configure the battery's output power to be a fourth output power, the fourth output power is a product of a third percentage and the second output power, the fourth output power is less than the second output power, and the fourth output power is greater than the first output power.

7. The method according to claim 4, wherein when the target fault level is the third fault level, the executing a target fault processing policy corresponding to the target fault level comprises:
sending a fourth indication message to the battery, wherein the fourth indication message is used to configure the battery's output power to be a fifth output power, and configure the battery's output power from the fifth output power to zero at a third moment, duration between the third moment and the first moment is preset duration, the fifth output power is a product of a third percentage and the second output power, and the fifth output power is less than the second output power; and
generating and storing a fault log of the battery.

8. A fault processing apparatus, wherein the apparatus comprises an obtaining module and a processing module;
the obtaining module is configured to obtain a first parameter value of a target parameter of a battery at a first moment;
the processing module is configured to determine a target fault level among multiple fault levels of the battery based on the first parameter value, wherein the target fault level is used to indicate a risk level of the battery at the first moment; and
the processing module is further configured to execute a target fault processing policy corresponding to the target fault level.

9. A fault processing apparatus, wherein the fault processing apparatus comprises a processor, the processor is coupled to a memory, the memory is configured to store a program or instructions, and when the program or the instructions are executed by the processor, the apparatus is enabled to perform the method according to any one of claims 1 to 7.

10. A computer-readable storage medium having a computer program or instructions stored thereon, wherein when the computer program or the instructions are executed, a computer is enabled to perform the method according to any one of claims 1 to 7.
